# EUROPÄISCHE PATENTSCHRIFT

(11) **EP 3 326 451 B1**
(45) Veröffentlichungstag und Bekanntmachung des Hinweises auf die Patenterteilung: **24.11.2021**
(21) Anmeldenummer: 17199144.1
(22) Anmeldetag: 30.10.2017
(51) Int. Cl.: A01F 15/14, B30B 9/30, B65B 27/12, B65B 13/20, B65B 63/02, B65B 13/28, A01F 15/08

(54) **BALLENPRESSE FÜR LOSES PRESSGUT**
BALE PRESS FOR LOOSE MATERIAL
PRESSE À BALLES POUR MATIÈRE À PRESSER EN VRAC

(30) Priorität: 29.11.2016 DE 102016014198
(43) Veröffentlichungstag der Anmeldung: 30.05.2018
(73) Patentinhaber: Unotech GmbH, 49779 Niederlangen (DE)
(72) Erfinder: TELSCHER, Thomas, 49078 Osnabrück (DE)
(74) Vertreter: Lenzing Gerber Stute

(56) Entgegenhaltungen:
- EP-A1- 2 014 455
- DD-A1- 96 045
- DE-A1- 2 656 457
- DE-A1- 4 416 584
- DE-U1-202012 010 760
- US-A1- 2009 272 282

## Beschreibung

Die vorliegende Erfindung betrifft eine Ballenpresse und ein Verfahren zur Verwendung der Ballenpresse.

Ballenpressen werden eingesetzt, um loses Material wie zum Beispiel Papier und Pappe, Kunststoffabfälle, gemischte Abfälle oder Fasermaterialien zu quaderförmigen Ballen zu verpressen, die dann mit verschiedenartigen Abbindungen versehen werden können. Die Ballen können dann gestapelt und transportiert werden, wobei der Platzbedarf und der Aufwand beim Handling deutlich verringert ist.

Es gibt verschiedene Bauformen von Ballenpressen. Neben Kanal-Ballenpressen mit einer zweiseitig offenen Presskammer und einem nachfolgenden Presskanal, in dem dort befindliche Ballen als Widerlager für den Pressvorgang genutzt werden, gibt es auch die gattungsgemäßen Ballenpressen mit einer einseitig offenen Presskammer, die sich durch eine bessere Formhaltung der erzeugten Ballen und durch eine kürzere Bauform auszeichnen.

Gattungsgemäße Ballenpressen sind beispielsweise aus der DE 69506769 T2 und der DE 20 2012 010 760 U1 bekannt. Letztere bildet den nächstkommenden Stand der Technik, bei dem das Pressgut nach dem Pressen quer zur Pressrichtung in einen Ballenkanal verpresst wird und dort von einer separaten Vorschubeinrichtung schrittweise durch eine Bandagiereinrichtung gefördert wird. Die Bandagiereinrichtung umreift den Ballen an seinen äußeren Umfangsflächen, also bezogen auf die Förderrichtung in dem Ballenkanal an den beiden Seitenflächen, der Oberseite und der Unterseite. In Förderrichtung bleiben die Vorderseite und die Rückseite des Ballens frei von Bandagierung.

Der Abstand der Bandagierungen auf dem Ballen entspricht jeweils der Schrittweite, die durch die Fördereinrichtung in dem Ballenkanal vorgegeben ist.

Während die Bandagierung am Ende des Ballenkanals erfolgt und der schrittweise Vorschub in dem Ballenkanal vorgenommen wird, kann die Ballenpresse selbst bereits weitere Presshübe ausführen. Hierbei ist allerdings erforderlich, dass der Antrieb der Presse, der üblicherweise hydraulisch erfolgt, simultan die Antriebsleistung für den Presshub und für den schrittweisen Vorschub in dem Ballenkanal erzeugen kann. Die DE 26 56 457 A1 beschreibt eine weitere Ballenpresse für loses Pressgut mit einem Füllschacht und einem Press- und Ausgabestempel, der den Ballen nach einem Pressvorgang in einer Ausgaberichtung aus einem Presskasten befördert, wobei der Presskasten einen Trennschieber aufweist gegen den das Pressgut komprimiert wird. Die Druckschrift beschreibt ferner eine Bandagiereinrichtung zur Umreifung des in dem Pressvorgang geformten Ballens, die den Ballenkanal in Querrichtung durchgreifende Schnürnadeln aufweist. Der Hub des Press- und Ausgabestempels reicht bis hinter die Schnürnadeln, so dass der Ballen durch die Bandagiereinrichtung befördert wird.

Die DE 20 2012 010760 U1 beschreibt eine weitere Ballenpresse, bei der mittels eines Pressstempels loses Pressgut in einem Kasten komprimiert wird, der während der Kompression durch eine Schiebewand in Ausschubrichtung hinter dem Kasten begrenzt wird. Der Kompressionskasten liegt räumlich im Ausstoßkanal. Das Ausstoßen erfolgt mittels einer Ausstoßwand. Beim Ausstoßen scheint keine Komprimierung zu erfolgen sondern lediglich eine Ausschubbewegung. Der Hub der Ausstoßwand endet in Ausstoßrichtung kurz hinter der Schiebewand vor einer Bandagiervorrichtung.

Die US 2009/272282 A1 beschreibt eine Ballenpresse, bei der eine Kompression des losen Pressguts in einem Presskanal erfolgt. Die Kompression im Presskanal erfolgt mittels eines Stempels gegen den Reibungswiderstand der in Pressrichtung hinter dem zu komprimierenden Pressgut liegenden Ballen, die bereits komprimiert und gebündelt sind. Eine Vorkomprimierung erfolgt über eine schwenkbare Klappe.

Die EP 2 014 455 A1 beschreibt eine Ballenpresse bei der mittels einer Pressplatte loses Pressgut in einem Kasten komprimiert wird, der während der Kompression durch eine zu öffnende Tür in Ausschubrichtung hinter dem Kasten begrenzt wird. Der Kompressionskasten liegt räumlich in einem Bereich, der als Ausstoßkanal bezeichnet werden kann. Das Ausstoßen erfolgt mittels einer Ausstoßwand. Der Hub der Ausstoßwand endet in Ausstoßrichtung kurz hinter der zu öffnenden Tür.

Es ist deshalb Aufgabe der vorliegenden Erfindung, eine gattungsgemäße Ballenpresse dahingehend zu verbessern, dass der Antrieb der Presse kleiner ausgelegt werden kann. Es ist außerdem Aufgabe der vorliegenden Erfindung, eine gattungsgemäße Ballenpresse und ein Arbeitsverfahren bereitzustellen, die eine kürzere Taktzeit erlauben.

Diese Aufgabe wird von einer Ballenpresse mit den Merkmalen des Anspruchs 1 und von einem Verfahren mit den Merkmalen des Anspruchs 9 gelöst.

Weil bei einer gattungsgemäßen Ballenpresse der Arbeitshub des Ausgabestempels in Ausgaberichtung bis hinter die wenigstens eine Nadel der Bandagiereinrichtung reicht, so dass der Ausgabestempel bei einem vollständigen Arbeitshub den Ballen durch die Bandagiereinrichtung befördert, kann auf separate Mitnehmer zur Beförderung des Ballens in dem Ballenkanal verzichtet werden.

Wenn der Ausgabestempel der einzige Antrieb zur Förderung des Ballens in Ausgaberichtung bis zur Fertigstellung der Umreifung ist, wird durch den Wegfall der Mitnehmer die Presse insgesamt einfacher. Es ergeben sich aber auch Vorteile hinsichtlich der Arbeitsgeschwindigkeit.

Die Bandagiereinrichtung ist bevorzugt so ausgebildet, dass sie Bandagen an die in Ausgaberichtung vordere Stirnseite und die in Ausgaberichtung hintere Rückseite sowie an zwei Seitenflächen des Ballens anlegt. Dadurch wird die Bandagierung besonders schnell anzufertigen.

Wenn die Bandagiereinrichtung dazu eingerichtet ist, zwei oder mehr, insbesondere vier bis sechs Bandagen simultan an die Ballen anzulegen, wird der Ballen besonders fest bandagiert, ohne dass die Taktzeit dadurch verlängert wird.

Vorzugsweise ist die Bandagiereinrichtung dazu eingerichtet, wahlweise Bandagen aus Metall oder aus einem Kunststoff an die Ballen anzulegen. Es können dann Ballen für verschiedene Zwecke ohne lange Umrüstzeiten gefertigt werden. Beispielsweise können Altpapierballen mit Draht umreift werden, während Kunststoffabfälle mit einem Kunststoffband umreift werden können. Dies ist für die spätere Verwertung vorteilhaft. Dies wird dadurch möglich, dass die Bandagiereinrichtung in einem Bereich der Ballenpresse angeordnet ist, in dem sie geringen Einschränkungen hinsichtlich Platzbedarf und Zugänglichkeit unterliegt.

Vorzugsweise ist die Bandagiereinrichtung dazu eingerichtet, die Bandagen in horizontaler Richtung an die Ballen anzulegen, weil dann kein Bauraum in der vertikalen Richtung über oder unter dem Ballenkanal erforderlich ist.

Es ist weiter bevorzugt, wenn die Bandagen von einer Anzahl von Vorratsspulen abgezogen werden. Durch einfachen Wechsel der Vorratsspulen kann dann innerhalb gewisser Grenzen das Bandagiermaterial variiert werden.

Ein erfindungsemäßes Verfahren erfolgt mittels einer Ballenpresse wie vorstehend beschrieben. Weil bei einem gattungsgemäßen Verfahren der Ballen in einem auf das Bandagieren abgestimmten Vorschub aus der Presskammer heraus und durch eine zwischen der Presskammer und dem Ballenkanal angeordnete Bandagiereinrichtung zumindest bis hinter den Arbeitsbereich der in einer solchen Bandagiereinrichtung vorhandenen Nadeln bewegt wird, werden die oben beschriebenen Vorteile erzielt, insbesondere durch Wegfall eines Schrittes zur Übergabe des Ballens von dem Ausgabestempel zu einer Mitnehmereinrichtung.

Vorzugsweise erfolgt das Bandagieren an der vorderen Stirnseite und an den Seitenflächen während des Vorschubs. Dies erhöht die mögliche Arbeitsgeschwindigkeit.

Ein kompakter und wartungsfreundlicher Aufbau ergibt sich, wenn das Bandagieren parallel zu einer Ebene erfolgt, die durch die Pressrichtung und die Ausgaberichtung aufgespannt wird.

Die Arbeitsgeschwindigkeit wird weiter verbessert, wenn bei dem Bandagieren zwei oder mehr Bandagen simultan erzeugt werden. Bevorzugt sind vier bis sechs parallele Bandagen vorgesehen.

Es ist insbesondere vorteilhaft, wenn bei dem erfindungsgemäßen Verfahren die zwei oder mehr Bandagen aus Metalldraht oder Kunststoffdraht erzeugt werden.

Nachfolgend wird ein Ausführungsbeispiel der vorliegenden Erfindung anhand der Zeichnung näher beschrieben. Es zeigen:
- Figur 1:: eine erfindungsgemäße Ballenpresse in einer schematischen Darstellung in Draufsicht vor einem Verdichtungshub;
- Figur 2:: die Ballenpresse nach Figur 1 während des Ausschiebens des verpressten Ballenmaterials;
- Figur 3:: die Ballenpresse nach Figur 1 und Figur 2 während des Bandagierens des Ballens;
- Figur 4:: die Ballenpresse nach Figur 3 bei weiter fortgeschrittener Bandagierung;
- Figur 5:: die Ballenpresse nach Figur 4 mit fertig gestellter Bandagierung; sowie
- Figur 6:: die Ballenpresse nach Figur 3 in einer Seitenansicht.

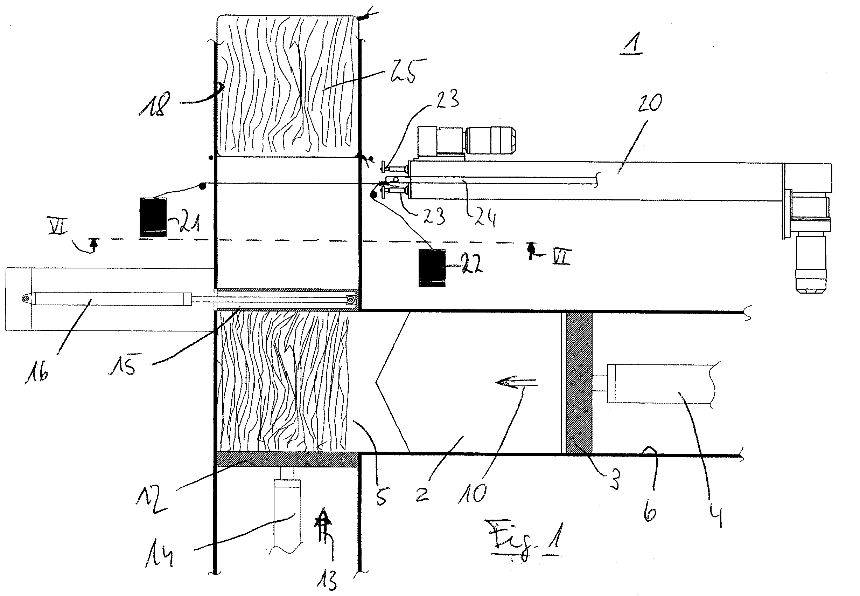

Die Figur 1 zeigt eine Ballenpresse für loses Pressgut, wie z. B. Papier- oder Kunststoffabfälle als Recyclinggut, in einer Draufsicht. Die Ballenpresse 1 weist einen nach oben offenen Eingabebereich 2 auf, in den das Pressgut beispielsweise über einen Bandförderer eingegeben wird. Ein Pressstempel 3 ist mittels eines hydraulischen Kolben/Zylinderantriebs 4 in Richtung einer Presskammer 5 in einem Presskanal 6 verfahrbar, wobei eine Pressrichtung 10 mit einem Richtungspfeil in Figur 1 angedeutet ist. Die Pressrichtung 10 ist bei diesem Ausführungsbeispiel horizontal orientiert.

Ein Ballen wird in mehreren Arbeitshüben des Pressstempels 3 erzeugt. Der in Figur 1 dargestellte Ballen in der Presskammer 5 ist nahezu fertiggestellt.

Die Presskammer 5 ist bis auf die dem Pressstempel 3 zugewandte Seite allseits geschlossen, damit der Verdichtungsdruck aufgebaut werden kann. Die in Pressrichtung 10 linke Wand wird von einem Ausgabestempel 12 gebildet, der ebenfalls über einen in einer Ausgaberichtung 13 wirkenden hydraulischen Antrieb 14 verfügt. Die in Pressrichtung rechte Wand ist von einem Wandteil 15 gebildet, dass in einer horizontalen Richtung parallel zu der Pressrichtung 10 verfahrbar ist. Dazu ist dem Wandteil 15 ein weiterer hydraulischer Antrieb 16 zugeordnet. Die Öffnungsrichtung ist in diesem Ausführungsbeispiel parallel und gleichsinnig zu der Pressrichtung 10 orientiert.

Das Wandteil 15 ist in der Figur 1 in geschlossener Stellung dargestellt. Es verschließt die Presskammer 5 gegenüber einem Ballenkanal 18. Der Ballenkanal 18 ist quer zu dem Presskanal 6 ausgerichtet und verläuft, ausgehend von der Pressrichtung 10, nach rechts. Der Ballenkanal ist mit einer Bandagiereinrichtung 20 versehen. Die Bandagiereinrichtung 20 ist hier als Drahtabbindung mit zwei Vorratsspulen 21 und 22 dargestellt. Die Drähte werden von entsprechenden Greifern 23 und einer Nadel 24 in an sich bekannter Weise geholt und verdrillt bzw. verknotet. In der Draufsicht der Figur 1 sind nur zwei Drähte erkennbar. Senkrecht zur Zeichenebene sind jedoch mehrere parallel angeordnete Drahtzüge mit jeweils zugeordneten Greifern und Nadeln vorgesehen, je nach Ballengröße etwa drei bis sechs. Weiter in Ausgaberichtung 13 ist in dem Ballenkanal 18 ein bereits fertiggestellter und umreifter Ballen 25 dargestellt.

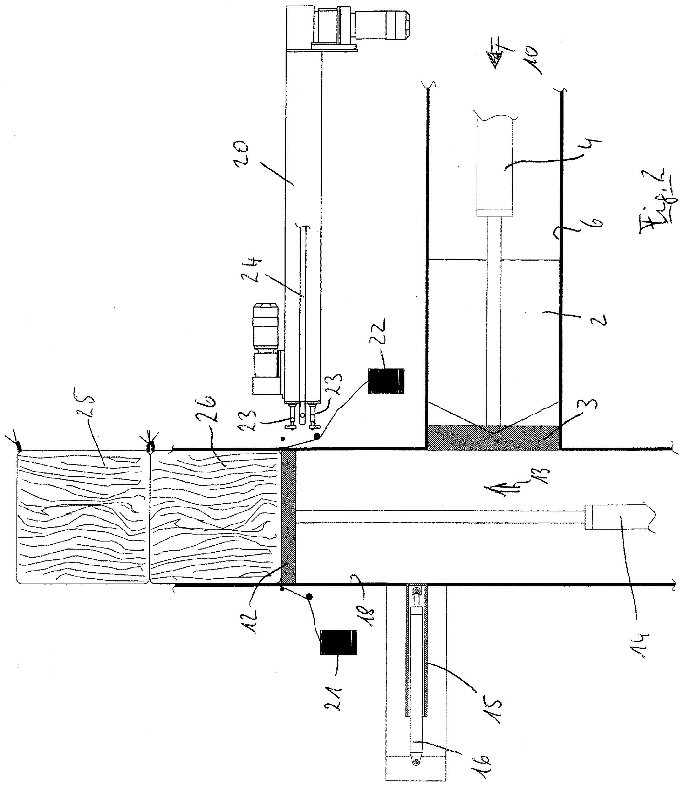

Die Figur 2 zeigt die Ballenpresse aus Figur 1 in derselben Ansicht. In dieser Darstellung ist der Pressstempel 3 so weit in Pressrichtung 10 in den Presskanal 6 eingefahren, das die dem Pressgut zugewandte Stirnfläche des Pressstempels 3 im Wesentlichen mit der Innenwand des Ausgabekanals 18 fluchtet. In diesem Verfahrensschritt wurde ein zweiter Ballen 26 gepresst. Das Wandteil 15 ist aus dem Ausgabekanal 18 durch Betätigung des Antriebs 16 herausgefahren worden, so dass der Querschnitt des Ausgabekanals 18 in der Ausgaberichtung 13 frei ist. Durch Betätigung des Antriebs 14 wurde der Ausgabestempel 12 in die in Figur 2 dargestellte Position verfahren. Dabei wurde der Ballen 26 gegen den von der Vorratsspule 21 kommenden Draht gedrückt und hat diesen in Ausgaberichtung 13 mitgenommen. Auch der von der Vorratsspule 22 kommende Draht, der mit dem von der Vorratsspule 21 kommenden Draht verdrillt oder verknotet ist, wurde von dem Ballen 26 in der Ausgaberichtung 13 mitgenommen. Die beiden Drähte liegen nun an dem Ballen 26 an der bezüglich der Ausgaberichtung 13 voreilenden Stirnseite und an der rechten und der linken Längsseite an.

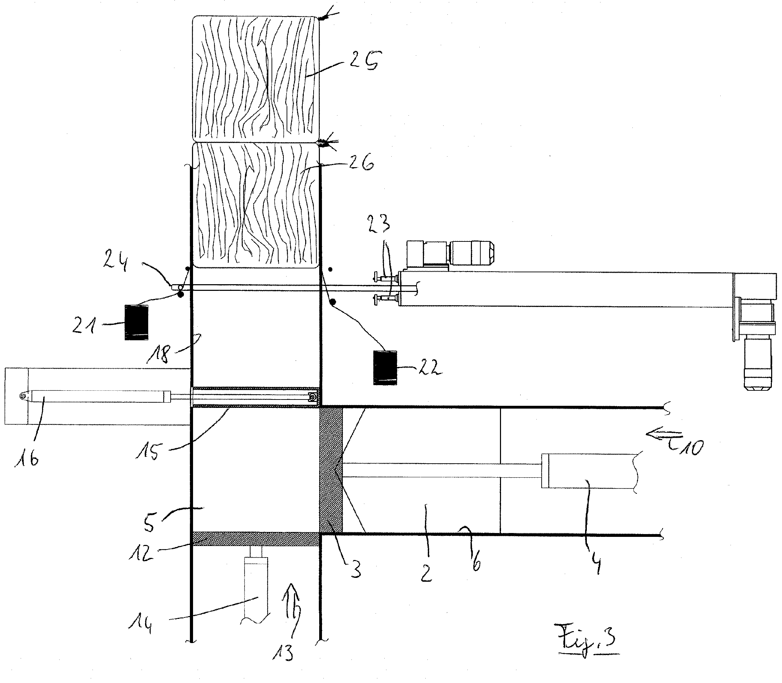

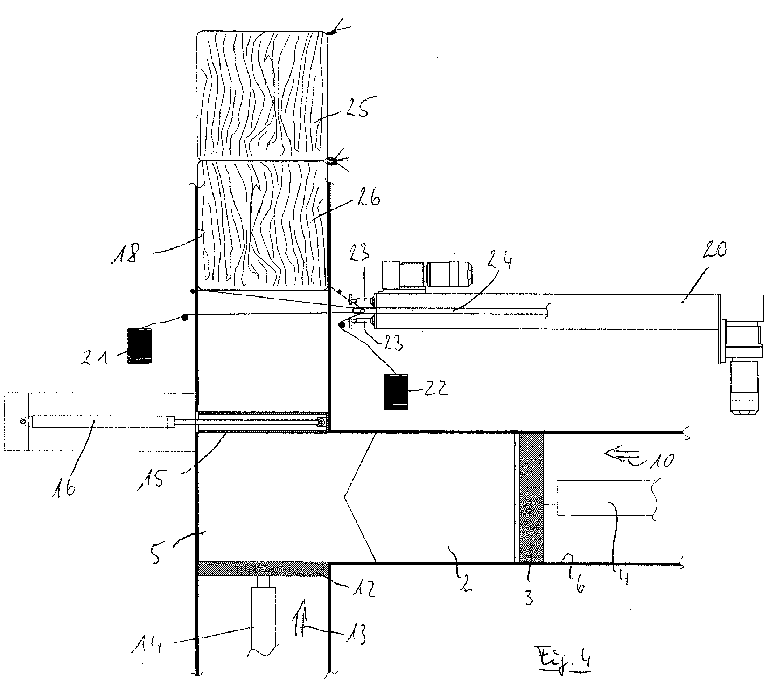

Die Ballenpresse wird in der Figur 3 in derselben Ansicht wie in den Figuren 1 und 2 dargestellt, also in einer Draufsicht. Die Position des Pressstempels 3 ist gegenüber Figur 2 unverändert. Der Ausgabestempel 12 ist entgegen der Ausgaberichtung 13 zurück in die Ausgangsposition der Figur 1 gefahren. Der Ausgabestempel 12 bildet nun wieder eine Begrenzungswand der Presskammer 5. Auch das Wandteil 15 ist wieder in die in Figur 1 dargestellte Ausgangsstellung verfahren und bildet eine weitere, dem Ausgabestempel 12 gegenüber liegende Wand der Presskammer 5. In dieser Stellung ist die Presskammer 5 allseitig geschlossen. Der Pressstempel 3 ist bereit für einen weiteren Arbeitshub. Im Ballenkanal 18 ist die Nadel 24 der Bandagiereinrichtung 20 quer durch den Ballenkanal 18 ausgefahren und ergreift mit einem Widerhaken den von der Vorratsspule 21 kommenden Draht zwischen der Vorratsspule 21 und dem Punkt, an dem der Draht in den Ballenkanal 18 eingeführt wird. Der zweite Ballen 26 sitzt in dieser Situation in dem Ballenkanal 18 und ist an seiner bezüglich der Ausgaberichtung 13 vorderen Stirnseite sowie an den beiden Längsseiten mit Draht umschlungen. Die nacheilende Stirnseite des Ballens 26 ist noch nicht umreift. Eine Rückexpansion entgegen der Ausgaberichtung 13 findet jedoch nur in geringem Maß statt, da diese Richtung quer zu der Pressrichtung 10 orientiert ist und eine Rückexpansion in erster Linie in oder entgegen der Pressrichtung 10 erfolgen würde. Eine weitere Stellung im Verfahrensablauf ist in der Figur 4 dargestellt, die wiederum eine Draufsicht auf die Ballenpresse ist.

Der Pressstempel 3 ist entgegen der Pressrichtung 10 zurückgezogen worden, sodass der Eingabebereich 2 wieder wie in Figur 1 frei ist. Die anderen fünf Seitenwände der Presskammer 5 sind ebenfalls in der Ausgangsposition. Der Pressvorgang zur Erzeugung des nächsten Ballens in der Presskammer 5 kann also erneut ablaufen. Gleichzeitig wurde die Nadel 24 von dem Antrieb der Bandagiereinrichtung 20 zurück in die Ausgangsstellung der Figur 1 verfahren, wobei der Draht, der von der Vorratsspule 21 kommt, quer durch den Ballenkanal 18 gezogen wurde. Da die Nadel 24 mit dem Widerhaken so weit in die Bandagiereinrichtung 20 zurück gezogen wird, dass sie auch den Verlauf des von der Vorratsspule 22 kommenden Drahtes durchsetzt, wird auch dieser Draht ein Stück weit in Richtung auf die Bandagiereinrichtung 20 mitgenommen.

Bemerkenswert ist hier, dass der Vorgang des Bandagierens noch nicht abgeschlossen ist, während die Presseinrichtung mit dem Pressstempel 3 und der Presskammer 5 bereits wieder für den nächsten Arbeitshub bereit ist und das Pressgut verdichtet werden kann. Die Erzeugung des Ballens in der Presskammer 5 ist also zeitlich entkoppelt von dem Bandagieren, das im Ballenkanal 18 erfolgt.

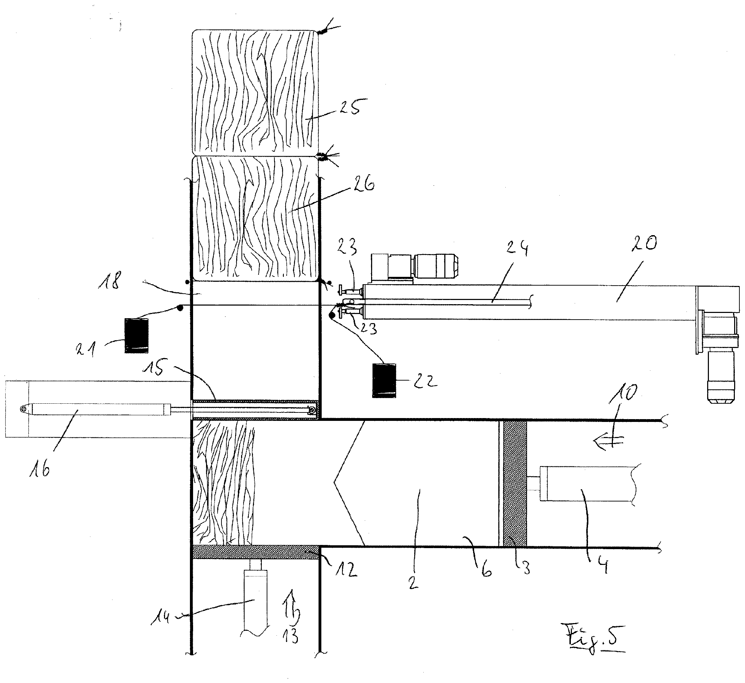

In der Figur 5 ist der Abschluss des Bandagiervorgangs bereits erfolgt. Die Greifer 23 haben die bezüglich der Ausgaberichtung 13 vor und hinter der Nadel 24 liegenden Drahtabschnitte ergriffen und verdrillt, wobei jeder Greifer 23 einen eigenen verdrillten Bereich zur Verbindung der von den Vorratsspulen 21 und 22 abgezogenen Drähte erzeugt hat. Zwischen den beiden verdrillten Bereichen wurden die Drähte durchtrennt.

Der Ballen 26 ist somit fertiggestellt und sitzt in dem Ballenkanal 18, wo er als Widerstand für den nächsten Ballen dient, der als Teilballen 27 in Fig. 5 angedeutet ist.

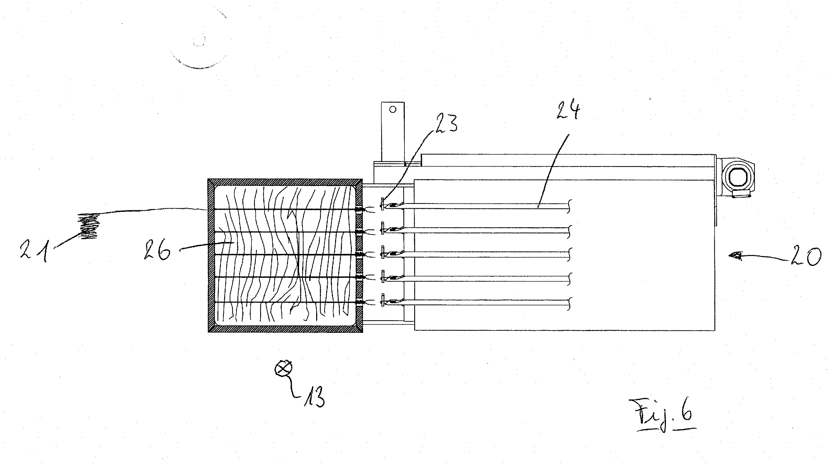

Schließlich zeigt die Figur 6 einen Längsschnitt etwa entlang der Linie VI-VI aus Figur 1. Die Ansicht ist in Richtung der Ausgaberichtung 13 orientiert. Die Pressrichtung 10 und der Arbeitshub der Nadeln 24 verlaufen parallel zu der Zeichenebene. Die Bandagiereinrichtung 20 ist mit insgesamt fünf Nadeln 24 und entsprechend zehn Greifern 23 versehen, die parallel zueinander angeordnet sind und einen Abstand voneinander aufweisen, der so gewählt ist, dass über den Querschnitt des Ausgabekanals 18 die Bandagierungen gleichmäßig verteilt sind. In dem vorliegenden Ausführungsbeispiel wird jeder Ballen 26 mit insgesamt fünf Bandagierungen versehen, die den Ballen an seiner Vorderseite, seinen beiden Längsseiten und seiner Rückseite, bezogen auf die Ausgaberichtung 13, umschlingen und damit in Form halten.

Im Folgenden soll der Verfahrensablauf zur Fertigung von gepressten Ballen aus Pressgut wie zum Beispiel Papier-und Kunststoffabfällen im Zusammenhang erläutert werden.

Ausgehend von einem leeren Presskanal 6 und einem leeren Pressraum 5 ist der Pressstempel 3 zunächst in seiner Anfangsposition, die entgegen der Pressrichtung 10 festgelegt ist. Diese Position ist in den Figuren 1, 4 und 5 dargestellt. Loses Pressgut kann nun in den Eingabebereich 2 gegeben werden. Das Pressgut wird in einem Arbeitshub von den Pressstempel 3 in die Presskammer 5 gepresst und bildet dort einen ersten Teilballen, der beispielsweise 20 % der Presskammer 5 ausfüllt. Vier weitere Arbeitshübe füllen dann die Presskammer zu nahezu 100 %.

Nach dem letzten Arbeitshub bleibt der Pressstempel 3 in der in Figur 2 dargestellten Position und das Wandteil 15 wird von dem Antrieb 16 aus dem Ballenkanal 18 heraus gefahren, sodass sich die Presskammer 5 zu dem Ballenkanal 18 hin öffnet. Der Ausgabestempel 12 wird dann von dem Antrieb 14 in der Ausgaberichtung 13 bewegt und stößt den soeben gefertigten Ballen in den Ballenkanal 18, und zwar so weit, dass die rückwärtige Stirnseite des Ballens hinter den Arbeitsbereich der Nadel 24 kommt. Der so in dem Ballenkanal 18 vorwärts bewegte Ballen nimmt den von der Vorratsspule 21 kommenden Draht mit, ebenso den von der Vorratsspule 22 kommenden Draht, da die beiden Drähte durch eine Verdrillung miteinander verbunden sind.

Nun fährt der Pressstempel 12 entgegen der Ausgaberichtung 13 zurück in seine Ausgangsstellung gemäß Figur 1. Das Wandteil 15 wird ebenfalls in die Ausgangsstellung zurückgefahren, so dass die Presskammer 5 nun wieder geschlossen und bereit für die Anfertigung der folgenden Teilballen ist.

Die in diesem Ausführungsbeispiel insgesamt fünf Nadeln 24 führen ihren Arbeitshub quer durch den Ballenkanal 18 aus, sobald die Rückwärtsbewegung des Pressstempels 12 den dafür erforderlichen Bereich des Ballenkanals 18 frei gibt.

Ein Widerhaken pro Nadel 24 greift dabei hinter den von der Vorratsrolle 21 kommenden Draht und zieht diesen bei der Rückwärtsbewegung quer durch den Ballenkanal 18. Am Ende der Rückwärtsbewegung der Nadel 24 wird auch noch der zweite Draht, der von der Vorratsrolle 22 kommt, mitgenommen. Jeder Nadel 24 sind zwei Greifer 23 zugeordnet, die nun die vor und hinter der Nadel liegenden Drähte ergreifen und verdrillen. Danach werden wie Drähte zwischen den beiden Verdrillungen aufgetrennt. Der Vorgang der Ballenformung und Bandagierung ist damit abgeschlossen.

Ein wesentlicher Vorteil dieser Ballenpresse besteht darin, dass der Vorgang des Bandagierens in dem Ballenkanal durchgeführt wird, und zwar an einer Position, die mit der Presskammer und insbesondere dem beweglichen Wandteil der Presskammer nicht interferiert. Das Pressen den nächstfolgenden Ballens kann deshalb bereits beginnen, wenn das Bandagieren noch nicht abgeschlossen ist. Es ist ersichtlich, dass sich dadurch die Taktzeit der Ballenpresse verkürzen und der Durchsatz steigern lässt.

Die Art der Bandagierung ist dabei nicht festgelegt. Es können wie in dem beschriebenen Ausführungsbeispiel Drahtbandagierungen mit Metalldraht vorgesehen sein, aber auch Bandagierungen mit Bändern oder Monofilamenten aus Kunststoff.

Da die Bandagierungseinrichtung 20 eine abgeschlossene Baugruppe darstellt und der Ort der Bandagierung Freiheiten in der Anordnung lässt, können auch verschiedene Bandagiervorrichtungen vorgesehen sein, die entweder dauerhaft montiert bleiben können und jeweils nach Bedarf angesteuert werden können, oder die als Baugruppe in kurzer Zeit ausgewechselt werden können. So kann man die Art der Bandagierung an geänderte Anforderungen der Abnehmer oder des Pressguts anpassen.

## Patentansprüche

1. Ballenpresse (1) für loses Pressgut,
- mit einem Eingabebereich (2) und
- einem Pressstempel (3), der dazu eingerichtet ist, das Pressgut von dem Eingabebereich (2) in einer Pressrichtung (10) in eine einseitig offene Presskammer (5) zu pressen,
- mit einem Ausgabestempel (12), der den Ballen (25, 26) nach dem Pressvorgang in einer Ausgaberichtung (13) aus der Presskammer (5) befördert,
- mit einem Ballenkanal (18), der eine Eintrittsöffnung und eine Austrittsöffnung aufweist und der sich von der Presskammer (5) in der Ausgaberichtung (13) quer zu der Pressrichtung (10) erstreckt,
- wobei die Presskammer (5) eine der Eintrittsöffnung des Ballenkanals (18) zugewandte, nach dem Pressvorgang zu öffnende Seitenwand (15) aufweist,
- und mit einer Bandagiereinrichtung (20) zur Umreifung des in dem Pressvorgang geformten Ballens (25, 26), die wenigstens eine bei einem Arbeitshub den Ballenkanal in Querrichtung durchgreifende Nadel (24) aufweist, wobei
- der Arbeitshub des Ausgabestempels (12) in Ausgaberichtung (13) bis hinter die wenigstens eine Nadel (24) der Bandagiereinrichtung (20) reicht, so dass der Ausgabestempel (12) den Ballen (25, 26) durch die Bandagiereinrichtung (20) befördert.

2. Ballenpresse nach Anspruch 1, **dadurch gekennzeichnet, dass** die Bandagiereinrichtung (20) in der Ausgaberichtung (13) zwischen der Eintrittsöffnung und der Austrittsöffnung des Ballenkanals (18) angeordnet ist.

3. Ballenpresse nach einem der vorhergehenden Ansprüche, **dadurch gekennzeichnet, dass** der Ausgabestempel (12) der einzige Antrieb zur Förderung des Ballens (25, 26) in Ausgaberichtung (13) bis zur Fertigstellung der Umreifung ist.

4. Ballenpresse nach einem der vorhergehenden Ansprüche, **dadurch gekennzeichnet, dass** die Bandagiereinrichtung (20) Bandagen an die in Ausgaberichtung (13) vordere Stirnseite und die in Ausgaberichtung hintere Rückseite sowie an zwei Seitenflächen des Ballens (25, 26) anlegt.

5. Ballenpresse nach einem der vorhergehenden Ansprüche, **dadurch gekennzeichnet, dass** die Bandagiereinrichtung (20) dazu eingerichtet ist, zwei oder mehr Bandagen simultan an die Ballen (25, 26) anzulegen.

6. Ballenpresse nach einem der vorhergehenden Ansprüche, **dadurch gekennzeichnet, dass** die Bandagiereinrichtung (20) dazu eingerichtet ist, wahlweise Bandagen aus Metall oder aus einem Kunststoff an die Ballen (25, 26) anzulegen.

7. Ballenpresse nach einem der vorhergehenden Ansprüche, **dadurch gekennzeichnet, dass** die Bandagiereinrichtung (20) dazu eingerichtet ist, die Bandagen in horizontaler Richtung an die Ballen (25, 26) anzulegen.

8. Ballenpresse nach einem der vorhergehenden Ansprüche, **dadurch gekennzeichnet, dass** die Bandagen von einer Anzahl von Vorratsspulen (21, 22) abgezogen werden.

9. Verfahren zum Pressen von losem Pressgut zu Ballen (25, 26) und zum Bandagieren der gepressten Ballen (25, 26) mittels einer Ballenpresse gemäß einem der Ansprüche 1-8, bei dem das lose eingegebene Pressgut in eine seitlich zu öffnende Presskammer (5) mit einer vorgegebenen Pressrichtung (10) zu Ballen (25, 26) gepresst und dann mittels eines Ausgabestempels (13) quer zur Pressrichtung (10) in einen Ballenkanal (18) und zu einer Bandagiereinrichtung (20) ausgepresst wird, **dadurch gekennzeichnet, dass** der Ballen (25, 26) in einem auf das Bandagieren abgestimmten Vorschub aus der Presskammer (5) heraus und durch eine zwischen der Presskammer (5) und dem Ballenkanal (18) angeordnete Bandagiereinrichtung (20) bewegt wird.

10. Verfahren nach Anspruch 9, **dadurch gekennzeichnet, dass** das Bandagieren an der vorderen Stirnseite und an den Seitenflächen während des Vorschubs erfolgt.

11. Verfahren nach Anspruch 9 oder 10, **dadurch gekennzeichnet, dass** das Bandagieren parallel zu einer Ebene erfolgt, die durch die Pressrichtung (10) und die Ausgaberichtung (13) aufgespannt wird.

12. Verfahren nach einem der vorhergehenden Ansprüche 9 bis 11, **dadurch gekennzeichnet, dass** bei dem Bandagieren zwei oder mehr Bandagen simultan erzeugt werden.

13. Verfahren nach einem der vorhergehenden Ansprüche 9 bis 12, **dadurch gekennzeichnet, dass** die zwei oder mehr Bandagen aus Metalldraht oder Kunststoffdraht erzeugt werden.

## Claims

1. A baling press (1) for bulk material to be compressed, comprising
- an input area (2) and
- a pressing ram (3) arranged to press said material to be compressed from said input area (2) in a pressing direction (10) into a pressing chamber (5) open at one side,
- a discharge ram (12) which, after the baling operation, conveys the bale (25, 26) out of said pressing chamber (5) in a discharge direction (13),
- a bale channel (18) which is provided with an inlet and an outlet opening and which extends from the pressing chamber (5) in the discharge direction (13) transversely to the pressing direction (10),
- which pressing chamber (5) is provided with a side wall (15) facing said inlet of the bale channel (18), and designed to be opened after the pressing operation,
- and a strapping device (20) which, for strapping the bale (25, 26) formed during the pressing process, is provided with at least one needle (24) passing through the bale channel in the transverse direction during a working stroke,
wherein
- the working stroke of the discharge ram (12) extends in the discharge direction (13) to behind the at least one needle (24) of the strapping device (20), so that said discharge ram (12) conveys the bale (25, 26) through said strapping device (20).

2. A baling press as claimed in claim 1, **characterized in that** the strapping device (20) is arranged in the discharge direction (13) between the inlet and the outlet of the bale channel (18).

3. A baling press according to one of the preceding claims, **characterized in that** the discharge ram (12) is the sole drive for conveying the bale (25, 26) in the discharge direction (13) until the strapping is completed.

4. A baling press according to one of the preceding claims, **characterized in that** the strapping device (20) applies strapping to the front side in the discharge direction (13) and to the rear side in the discharge direction as well as to two side surfaces of the bale (25, 26).

5. A baling press according to one of the preceding claims, **characterized in that** the strapping device (20) is arranged to apply two or more straps simultaneously to the bales (25, 26).

6. A baling press according to one of the preceding claims, **characterized in that** the strapping device (20) is arranged to selectively apply strapping made of metal or of a plastic material to the bales (25, 26).

7. A baling press according to one of the preceding claims, **characterized in that** the strapping device (20) is arranged to place the straps on the bales (25, 26) in the horizontal direction.

8. A baling press according to one of the preceding claims, **characterized in that** the straps are unwound from a number of supply coils (21, 22).

9. A method of pressing bulk material to be compressed into bales (25, 26) and of strapping the compressed bales (25, 26) by means of a baling press according to one of claims 1-8, wherein the supplied bulk material is pressed in a predetermined pressing direction (10) into bales (25, 26) into a pressing chamber (5), which can be opened laterally, and is then ejected by means of a discharge ram (12) transversely to said pressing direction (10) into a bale channel (18) and to a strapping device (20), **characterized in that** the bale (25, 26) is moved in a feed motion coordinated with the strapping out of the pressing chamber (5) and through a strapping device (20) arranged between the pressing chamber (5) and the bale channel (18).

10. A method according to claim 9, **characterized in that** the strapping takes place at the front end and at the side surfaces during the feed motion.

11. A method according to claim 9 or 10, **characterized in that** the strapping takes place parallel to a plane which is spanned by the pressing direction (10) and by the discharge direction (13).

12. A method according to any of the preceding claims 9 to 11, **characterized in that** two or more straps are produced simultaneously during strapping.

13. A method according to any of the preceding claims 9 to 12, **characterized in that** the two or more straps are produced from a metal wire or a plastic wire.

## Revendications

1. Presse (1) à balles, conçue pour une matière en vrac à comprimer, comprenant
- une zone d'introduction (2) et
- un bloc presseur (3) agencé pour presser ladite matière à comprimer à partir de ladite zone d'introduction (2), dans une direction de pressage (10), jusque dans une chambre de pressage (5) ouverte d'un côté,
- un bloc distributeur (12) qui, à l'issue de l'opération de pressage, convoie la balle (25, 26) hors de ladite chambre de pressage (5) dans une direction de délivrance (13),
- un canal (18) à balles, muni d'un orifice d'entrée et d'un orifice de sortie et partant de la chambre de pressage (5) dans la direction de délivrance (13), transversalement par rapport à la direction de pressage (10),
- laquelle chambre de pressage (5) est pourvue d'une paroi latérale (15) tournée vers ledit orifice d'entrée du canal (18) à balles, et conçue pour être ouverte à l'issue de l'opération de pressage,
- et un dispositif de cerclage (20) qui, destiné à enlacer la balle (25, 26) mise en forme au cours de l'opération de pressage, est doté d'au moins une aiguille (24) traversant ledit canal à balles dans la direction transversale, lors d'une course de travail,
sachant que
- la course de travail du bloc distributeur (12) s'étend, dans la direction de délivrance (13), jusque derrière l'aiguille (24) du dispositif de cerclage (20), à présence minimale, de telle sorte que ledit bloc distributeur (12) convoie la balle (25, 26) à travers ledit dispositif de cerclage (20).

2. Presse à balles selon la revendication 1, **caractérisée par le fait que** le dispositif de cerclage (20) est interposé, dans la direction de délivrance (13), entre l'orifice d'entrée et l'orifice de sortie du canal (18) à balles.

3. Presse à balles selon l'une des revendications précédentes, **caractérisée par le fait que** le bloc distributeur (12) constitue l'unique entraînement affecté au convoyage de la balle (25, 26), dans la direction de délivrance (13), jusqu'à l'achèvement de l'enlacement.

4. Presse à balles selon l'une des revendications précédentes, **caractérisée par le fait que** le dispositif de cerclage (20) pose des cerclages sur la face frontale située à l'avant dans la direction de délivrance (13) et sur la face postérieure située à l'arrière dans ladite direction de délivrance, ainsi que sur deux surfaces latérales de la balle (25, 26).

5. Presse à balles selon l'une des revendications précédentes, **caractérisée par le fait que** le dispositif de cerclage (20) est agencé pour poser simultanément, sur les balles (25, 26), des cerclages au nombre de deux ou plus.

6. Presse à balles selon l'une des revendications précédentes, **caractérisée par le fait que** le dispositif de cerclage (20) est agencé pour poser sélectivement, sur les balles (25, 26), des cerclages en métal ou en une matière plastique.

7. Presse à balles selon l'une des revendications précédentes, **caractérisée par le fait que** le dispositif de cerclage (20) est agencé pour poser les cerclages sur les balles (25, 26) dans la direction horizontale.

8. Presse à balles selon l'une des revendications précédentes, **caractérisée par le fait que** les cerclages sont dévidés à partir d'un certain nombre de bobines de réserve (21, 22).

9. Procédé dévolu au pressage d'une matière en vrac à comprimer en vue de produire des balles (25, 26), et au cerclage des balles (25, 26) comprimées, au moyen d'une presse à balles conforme à l'une des revendications 1-8, dans lequel la matière à comprimer délivrée en vrac est comprimée en des balles (25, 26), suivant une direction de pressage (10) préétablie, jusque dans une chambre de pressage (5) devant être ouverte latéralement, puis est expulsée au moyen d'un bloc distributeur (12), transversalement par rapport à ladite direction de pressage (10), jusque dans un canal (18) à balles et vers un dispositif de cerclage (20), **caractérisé par le fait que** la balle (25, 26) est mue, suivant une avance coordonnée avec le cerclage, hors de la chambre de pressage (5) et à travers un dispositif de cerclage (20) interposé entre ladite chambre de pressage (5) et ledit canal (18) à balles.

10. Procédé selon la revendication 9, **caractérisé par le fait que** le cerclage a lieu, au cours de l'avance, au niveau de la face frontale antérieure et des surfaces latérales.

11. Procédé selon la revendication 9 ou 10, **caractérisé par le fait que** le cerclage a lieu parallèlement à un plan dont l'étendue est couverte par la direction de pressage (10) et par la direction de délivrance (13).

12. Procédé selon l'une des revendications 9 à 11 précédentes, **caractérisé par le fait que** des cerclages, au nombre de deux ou plus, sont produits simultanément au cours du cerclage.

13. Procédé selon l'une des revendications 9 à 12 précédentes, **caractérisé par le fait que** les cerclages, au nombre de deux ou plus, sont produits à partir d'un fil métallique ou d'un fil en matière plastique.
